(19) **Europäisches Patentamt / European Patent Office / Office européen des brevets**

(11) **EP 3 091 741 B1**

(12) **EUROPEAN PATENT SPECIFICATION**

(45) Date of publication and mention
of the grant of the patent:
**27.10.2021 Bulletin 2021/43**

(51) Int Cl.:
**H04N 19/597** *(2014.01)*  **H04N 19/52** *(2014.01)*
**H04N 19/58** *(2014.01)*  **H04N 19/573** *(2014.01)*

(21) Application number: **14876960.7**

(22) Date of filing: **30.12.2014**

(86) International application number:
**PCT/KR2014/013034**

(87) International publication number:
**WO 2015/102367 (09.07.2015 Gazette 2015/27)**

(54) **METHOD FOR DECODING MULTI-VIEW VIDEO**

VERFAHREN ZUR DECODIERUNG EINES MEHRFACHANSICHTSVIDEOS

PROCÉDÉ POUR DÉCODER UNE VIDÉO MULTIVUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.01.2014 KR 20140000187**

(43) Date of publication of application:
**09.11.2016 Bulletin 2016/45**

(60) Divisional application:
**21196304.6**

(73) Proprietor: **Intellectual Discovery Co., Ltd.**
**Seoul 06212 (KR)**

(72) Inventors:
• **HAN, Jong Ki**
**Seoul 137-909 (KR)**
• **LEE, Jae Yung**
**Gwacheon-si**
**Gyeonggi-do 427-060 (KR)**

(74) Representative: **Betten & Resch**
**Patent- und Rechtsanwälte PartGmbB**
**Maximiliansplatz 14**
**80333 München (DE)**

(56) References cited:
WO-A1-2013/002342    KR-A- 20070 117 432
KR-A- 20090 113 281    KR-A- 20120 118 780
KR-A- 20130 050 903

• **ZHANG L ET AL: "Test Model 6 of 3D-HEVC and MV-HEVC", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-F1005, 16 December 2013 (2013-12-16), XP030131735,**
• **TECH G ET AL: "3D-HEVC Draft Text 2", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-F1001, 15 November 2013 (2013-11-15), XP030131730,**
• **ZHANG L ET AL: "CE4: Further improvements on advanced residual prediction", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-F0123, 18 October 2013 (2013-10-18), XP030131548,**
• **ZHANG K ET AL: "3D-CE4: Results on improved advanced residual prediction", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); URL: HTTP://PHENIX.INT-EVRY.FR/JCT2/,, no. JCT3V-F0108, 19 October 2013 (2013-10-19), XP030131524,**

- TAKAHASHI Y ET AL: "High-level Syntax: Motion vector prediction issue for long-term reference picture", 10. JCT-VC MEETING; 101. MPEG MEETING; 11-7-2012 - 20-7-2012; STOCKHOLM; (JOINT COLLABORATIVE TEAM ON VIDEO CODING OF ISO/IEC JTC1/SC29/WG11 AND ITU-T SG.16 ); URL: HTTP://WFTP3.ITU.INT/AV-ARCH/JCTVC-SITE/,, no. JCTVC-J0071, 29 June 2012 (2012-06-29) , XP030112433,
- MERKLE P ET AL: "Efficient Prediction Structures for Multiview Video Coding", IEEE TRANSACTIONS ON CIRCUITS AND SYSTEMS FOR VIDEO TECHNOLOGY, IEEE SERVICE CENTER, PISCATAWAY, NJ, US, vol. 17, no. 11, 1 November 2007 (2007-11-01), pages 1461-1473, XP011195138, ISSN: 1051-8215, DOI: 10.1109/TCSVT.2007.903665

- None

**Description**

**Technical Field**

The present disclosure relates to encoding/decoding a multi-view video, and more particularly, to methods and apparatuses for performing motion vector prediction and residual prediction for a multi-view video.

**Background Art**

High Efficiency Video Coding (HEVC), which is known as having about twice as much compression efficiency as legacy H.264/Advanced Video Coding (H.264/AVC), has recently been standardized.

HEVC defines a Coding Unit (CU), a Prediction unit (PU), and a Transform Unit (TU) in a quadtree structure, and adopts a Sample Adaptive Offset (SAO) and an in-loop filter such as a deblocking filter. HEVC also increases compression coding efficiency by improving conventional intra-prediction and inter-prediction.

In the meantime, Scalable Video Coding (SVC) is under standardization as an extension of HEVC, and Three-Dimensional Video Coding (3DVC) based on H.264/AV or HEVC is also under standardization through improvement of conventional Multi-View Coding (MVC).

The video experts group, MPEG of the international standardization organization, ISO/IEC has recently started to work on standardization of 3DVC. The standardization of 3DVC is based on an existing encoding technique for a Two-Dimensional (2D) single-view video (H.264/AVC), an encoding technique for a 2D multi-view video (MVC), and HEVC which has recently been standardized by the Joint Collaborative Team on Video Coding (JCT-VC).

Specifically, the MPEG and the ITU-T have decided to standardize 3DVC jointly and organized a new collaborative standardization group called Joint Collaborative Team on 3D Video Coding Extensions (JCT-3V). The JCT-3V is defining an advanced syntax for depth encoding/decoding in the conventional MVC, and standardizing an encoding/decoding technique for a new color image and depth image based on H.264/AVC and an encoding/decoding technique for a multi-view color image and depth image based on 3D-HEVC.

A variety of techniques are being discussed for standardization of 3DVC. They commonly include an encoding/decoding scheme based on inter-view prediction. In other words, because the amount of data of a multi-view video to be encoded and transmitted increases in proportion to the number of views, there is a need for developing an efficient technique for encoding/decoding a multi-view video based on dependency between views.

ZHANG L ET AL: "Test Model 6 of 3D-HEVC and MV-HEVC", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); No. JCT3V-F1005 discloses coding of dependent views.

TECH G ET AL: "3D-HEVC Draft Text 2", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/ WG11 AND ITU-T SG.16 ); no. JCT3V-F1001, specifies multiview abd depth video coding, referred to as 3D High Efficiency Video Coding (3D-HEVC).

ZHANG L ET AL: "CE4: Further improvements on advanced residual prediction",6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); No. JCT3V-F0123 discloses a proposal that is a follow-up of JCT3V-E0124 and improves coding efficiency of ARP.

ZHANG K ET AL: "3D-CE4: Results on improved advanced residual prediction", 6. JCT-3V MEETING; 25-10-2013 - 1-11-2013; GENEVA; (THE JOINT COLLABORATIVE TEAM ON 3D VIDEO CODING EXTENSION DEVELOPMENT OF ISO/IEC JTC1/SC29/WG11 AND ITU-T SG.16 ); No. JCT3V-F0108 presents an adaptive disparity vector derivation method for advanced residual prediction.

**Disclosure**

Technical Problem

To overcome the above problem, an aspect of the present disclosure is to provide a method and apparatus for encoding and decoding a motion vector for a multi-view video through motion vector prediction.

Another aspect of the present disclosure is to provide a method and apparatus for encoding and decoding a residual for a multi-view video through residual prediction.

Technical Solution

The invention is defined by the appended claims. In an aspect of the present disclosure, a method for decoding a multi-view video includes determining motion prediction schemes performed for a current block to be decoded and a corresponding block corresponding to the current block, and generating a motion vector predictor of the current block using a motion vector of the corresponding block according to the determined motion prediction schemes.

The determination of motion prediction schemes may include acquiring data for video decoding by decoding a received bit stream, and determining the motion prediction schemes performed for the current block and the corresponding block using the data for video decoding.

The acquisition of data for video decoding may include performing entropy decoding, dequantization, and inverse transformation on the received bit stream.

The determination of motion prediction schemes may include identifying the motion prediction schemes using at least one of view Identification (ID) information, view order information, and flag information for identifying a motion prediction scheme, included in the data for video decoding.

The determination of motion prediction schemes may include performing one of long-term prediction, short-term prediction, or inter-view prediction for each of the current block and the corresponding block, using the data for video decoding.

The generation of a motion vector predictor of the current block may include, when long-term prediction is performed for the current block and the corresponding block, generating the motion vector predictor of the current block as the motion vector of the corresponding block.

The generation of a motion vector predictor of the current block may include, when short-term prediction is performed for the current block and the corresponding block, generating the motion vector predictor of the current block by scaling the motion vector of the corresponding block using a ratio between an inter-picture reference distance of the current block and an inter-picture reference distance of the corresponding block.

The generation of a motion vector predictor of the current block may include, when inter-view prediction is performed for the current block and the corresponding block, generating the motion vector predictor of the current block by scaling the motion vector of the corresponding block using a ratio between an inter-view reference distance of the current block and an inter-view reference distance of the corresponding block.

The generation of a motion vector predictor of the current block may include, when different motion prediction schemes are performed for the current block and the corresponding block, not using the motion vector of the corresponding block.

The generation of a motion vector predictor of the current block may further include, when the motion vector of the corresponding block is not used due to different motion prediction schemes used for the current block and the corresponding block, generating the motion vector predictor of the current block based on a predetermined vector.

The predetermined vector may be (0, 0).

The generation of a motion vector predictor of the current block may include, when inter-view prediction is performed for one of the current block and the corresponding block and long-term prediction or short-term prediction is performed for the other block, not using the motion vector of the corresponding block.

The generation of a motion vector predictor of the current block may include, when long-term prediction is performed for one of the current block and the corresponding block and short-term prediction is performed for the other block, or when short-term prediction is performed for one of the current block and the corresponding block and long-term prediction is performed for the other block, not using the motion vector of the corresponding block.

The method may further include recovering a motion vector of the current block by adding the motion vector predictor of the current block to a motion vector difference of the current block included in the data for video decoding.

In another aspect of the present disclosure, a method for decoding a multi-view video includes determining a motion prediction scheme performed for a first reference block referred to for inter-view prediction of a current block to be decoded, and generating a prediction residual for the current block according to the motion prediction scheme of the first reference block.

The determination of a motion prediction scheme performed for a first reference block may include acquiring data for video decoding by decoding a received bit stream, and determining the motion prediction scheme performed for the first reference block, using the data for video decoding.

The acquisition of data for video decoding may include performing entropy decoding, dequantization, and inverse tranformation on the received bit stream.

The determination of a motion prediction scheme performed for a first reference block may include identifying the motion prediction scheme using at least one of view ID information, view order information, and flag information for identifying a motion prediction scheme, included in the data for video decoding.

The determination of a motion prediction scheme performed for a first reference block may include determining whether temporal prediction or inter-view prediction is performed for the first reference block by using the data for video decoding.

The generation of a prediction residual for the current block may include generating, as the prediction residual, a difference between a second reference block referred to for temporal motion prediction of the current block and a third reference block referred to for the first reference block.

The second reference block may belong to a picture closest in a temporal direction in a reference list for a current picture to which the current block belongs.

The generation of a prediction residual for the current block may include, when it is determined that temporal motion prediction is performed for the first reference block, generating a scaled motion vector by applying a scale factor to a motion vector used to search for the third reference block, and determining the second reference block using the scaled motion vector.

The scale factor may be generated based on a difference between a number of a reference picture to which the first reference block belongs and a number of a picture to which the third reference block, referred to for temporal motion prediction of the first reference block, belongs, and a difference between a number of a picture to which the current block belongs and a number of a picture to which the second reference block belongs.

The generation of a prediction residual for the current block may include, when it is determined that inter-view prediction is performed for the first reference block, determining the second reference block by applying (0, 0) as a motion vector used to search for the second reference block.

The method may further include recovering a residual of the current block by adding the prediction residual to a residual difference of the current block included in the data for video decoding.

In another aspect of the present disclosure, an apparatus for decoding a multi-view video includes a processor configured to determine a motion prediction scheme performed for a first reference block referred to for inter-view prediction of a current block to be decoded, and generate a prediction residual for the current block according to the motion prediction scheme of the first reference block.

## Advantageous Effects

According to an embodiment of the present disclosure, the method for performing motion vector prediction for a multi-view video enables effective encoding/decoding of a motion vector during encoding/decoding of a multi-view video. That is, a temporal motion vector can be predicted adaptively according to motion vector prediction schemes used for a current block and a corresponding block.

According to another embodiment (not covered by the claimed invention) of the present disclosure, the method for performing residual prediction for a multi-view video enables effective encoding/decoding of a residual during encoding/decoding of a multi-view video. That is, an error can be prevented from occurring in calculation of a scale factor used to scale a motion vector during generation of a prediction residual, thereby preventing an error in residual prediction for a multi-view video.

## Brief Description of the Drawings

Fig. 1 is a conceptual view illustrating a motion vector prediction method according to an embodiment of the present disclosure.

Fig. 2 is a conceptual view illustrating a motion vector prediction method according to another embodiment of the present disclosure.

Fig. 3 is a conceptual view illustrating a motion vector prediction method according to another embodiment of the present disclosure.

Fig. 4 is a conceptual view illustrating a motion vector prediction method according to another embodiment of the present disclosure.

Fig. 5 is a conceptual view illustrating a motion vector prediction method according to another embodiment of the present disclosure.

Fig. 6 is a flowchart illustrating a motion vector prediction method according to an embodiment of the present disclosure.

Fig. 7 is a conceptual view illustrating a residual prediction method according to an embodiment of the present disclosure.

Fig. 8 is a conceptual view illustrating a residual prediction method according to another embodiment of the present disclosure.

Fig. 9 is a conceptual view illustrating a residual prediction method according to another embodiment of the present disclosure.

Fig. 10 is a block diagram of apparatuses for encoding and decoding a multi-view video according to an embodiment of the present disclosure.

Fig. 11 is a block diagram of an apparatus for encoding a multi-view video according to an embodiment of the present disclosure.

Fig. 12 is a block diagram of an apparatus for decoding a multi-view video according to an embodiment of the present disclosure.

Mode **for** Carrying **Out the Invention**

Various modifications may be made to the present disclosure, and the present disclosure may be implemented in various embodiments. Various embodiments of the present disclosure are described with reference to the accompanying drawings. However, the scope of the present disclosure is not intended to be limited to the particular embodiments and it is to be understood that the present disclosure covers all modifications, equivalents, and/or alternatives falling within the scope of the present disclosure. In relation to a description of the drawings, like reference numerals denote the same components.

The term as used in the present disclosure, first, second, A, B, and the like may be used to describe various components, not limiting the components. These expressions are used to distinguish one component from another component. For example, a first component may be referred to as a second component and vice versa without departing the scope of the present disclosure. The term, and/or includes a combination of a plurality of related items or any of the plurality of related items.

When it is said that a component is "coupled with/to" or "connected to" another component, it should be understood that the one component is coupled or connected to the other component directly or through any other component in between. On the other hand, when it is said that a component is "directly coupled with/to" or "directly connected to" another component, it should be understood that the one component is coupled or connected to the other component directly without any other component in between.

The terms as used in the present disclosure are provided to describe merely specific embodiments, not intended to limit the scope of other embodiments. It is to be understood that singular forms include plural referents unless the context clearly dictates otherwise. In the present disclosure, the term "include" or "have/has" signifies the presence of a feature, a number, a step, an operation, a component, a part, or a combination of two or more of them as described in the present disclosure, not excluding the presence of one or more other features, numbers, steps, operations, components, parts, or a combination of two or more of them.

Unless otherwise defined, the terms and words including technical or scientific terms used in the following description and claims may have the same meanings as generally understood by those skilled in the art. The terms as generally defined in dictionaries may be interpreted as having the same or similar meanings as or to contextual meanings of related technology. Unless otherwise defined, the terms should not be interpreted as ideally or excessively formal meanings.

A video encoding apparatus and a video decoding apparatus as described below may be any of a Personal Computer (PC), a laptop computer, a Personal Digital Assistant (PDA), a Portable Multimedia Player (PMP), a PlayStation Portable (PSP), a wireless communication terminal, a smartphone, and a server terminal such as a TV application server and a service server, and may cover a wide range of devices each including a communication device, such as a communication modem, for conducting communication with a user terminal like various devices or a wired/wireless communication network, a memory for storing programs and data to encode or decode a video or perform inter-prediction or intra-prediction for encoding or decoding, and a microprocessor for performing computation and control by executing the programs.

Further, a video encoded to a bit stream by the video encoding apparatus may be transmitted to the video decoding apparatus in real time or non-real time through a wired/wireless network such as the Internet, a short-range wireless communication network, a Wireless Local Area Network (WLAN), a Wireless Broadband (WiBro) network, or a mobile communication network, or various communication interfaces such as a cable and a Universal Serial Bus (USB). The video decoding apparatus may recover and reproduce the video by decoding the received video.

In general, a video may be composed of a series of pictures, and each picture may be divided into predetermined areas such as frames or blocks. If a picture is divided into blocks, the divided blocks may be classified largely into intra-blocks and inter-blocks depending on an encoding scheme. An intra-block refers to a block encoded by intra-prediction coding, and the intra-prediction coding is a scheme of generating a prediction block by predicting pixels of a current block using pixels of previous blocks recovered through encoding and decoding in a current picture being encoded, and encoding the differences between the pixels of the prediction block and those of the current block. An inter-block refers to a block encoded by inter-prediction coding. The inter-prediction coding is a scheme of generating a prediction block by predicting a current block of a current picture by referring to one or more previous or future pictures and encoding the difference between the prediction block and the current block. A frame referred to for encoding or decoding a current

6

picture is called a reference frame. Also, it may be understood to those skilled in the art that the term as used herein, "picture" is interchangeable with its equivalent other terms, image, frame, or the like. Further, it may be understood to those skilled in the art that a reference picture is a recovered picture.

Further, the term, block conceptually covers a Coding Unit (CU), a Prediction Unit (PU), and a Transform Unit (TU) defined in High Efficiency Video Coding (HEVC). Particularly, motion estimation may be performed on a PU basis.

Specifically, a process of searching for a similar block to one PU in a previous encoded frame is called Motion Estimation (ME). ME may be a process of searching for a block having a smallest error with a current block, not meaning an actual motion of a block.

Also, the present disclosure relates to a video codec technique for a multi-view video, and ME may be applied to a process of referring to a picture of a different view. Herein, the process of referring to a picture of a different view may be referred to inter-view prediction.

Now, preferred embodiments of the present disclosure will be described in detail with reference to the attached drawings.

A description is given first of an embodiment of encoding and decoding a motion vector by motion vector prediction, and then an embodiment of encoding and decoding a residual by residual prediction.

### Embodiment 1 - Method for Encoding and Decoding Motion Vector through Motion Vector Prediction

Motion vector prediction may mean a process of calculating a Temporal Motion Vector Predictor (TMVP) using a correlation between temporal motion vectors, or calculating a Spatial Motion vector Predictor (SMVP) using a correlation between spatial motion vectors. A value calculated by subtracting a Motion Vector Predictor (MVP) from a motion vector of a current block may be referred to as a Motion vector Difference (MVD).

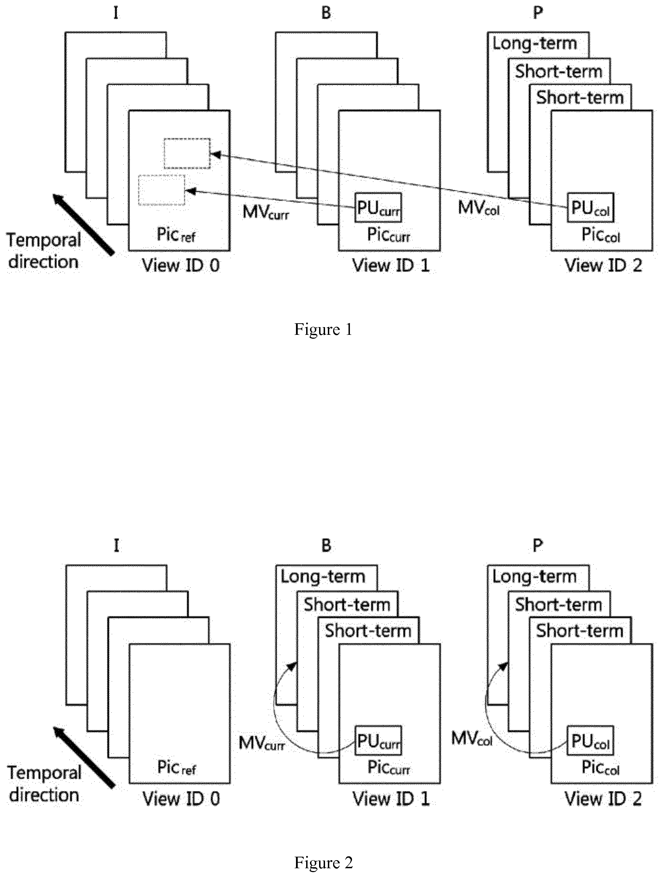

Fig. 1 is a conceptual view illustrating a motion vector prediction method according to an embodiment of the present disclosure.

Referring to Fig. 1, a Three-Dimensional (3D) video may be constructed using pictures captured from a plurality of views in a multi-view video. A view may be distinguished or identified by a View ID.

Specifically, a multi-view video may include a video of a base-view and at least one video of either an enhancement-view or an extension-view.

In Fig. 1, View ID 0 may identify a picture at a reference view, View ID 1 may include a picture (a current picture) of a view to be encoded or decoded currently, and View ID 2 may include a picture (a corresponding picture) of a view which has been encoded or decoded before encoding and decoding of the current picture. A corresponding block, $PU_{col}$ may refer to a block located in correspondence with the position of a current block $PU_{curr}$ in a picture different from a current picture $Pic_{curr}$ including the current block $PU_{curr}$. For example, the corresponding block $PU_{col}$ may refer to a block co-located with the current block $PU_{curr}$ in a picture different from the current picture $Pic_{curr}$. Also, a corresponding picture $Pic_{col}$ may refer to a picture including the corresponding block $PU_{col}$.

Motion estimation may be performed on the current picture $Pic_{curr}$ in order to refer to a picture of a different view or another picture of the same view.

In the present disclosure, long-term prediction may mean referring to a picture of the same view apart from a current picture by a predetermined time difference or farther. Accordingly, referring to a picture of the same view apart from a current picture by a time difference less than the predetermined time difference may be referred to as short-term prediction.

A result of scaling a motion vector of the corresponding block $PU_{col}$ located in correspondence with the current block $PU_{curr}$ in the corresponding picture $Pic_{col}$ may be used as a motion vector predictor(MVP) of the current block $PU_{curr}$. The corresponding picture $Pic_{col}$ is different from the current picture $Pic_{curr}$ including the current block $PU_{curr}$.

Fig. 1 illustrates a case in which a picture of a different view is referred to for the current block $PU_{curr}$ and a picture of a different view is also referred to for the corresponding block $PU_{col}$. That is, inter-view prediction may be performed for both the current block $PU_{curr}$ and the corresponding block $PU_{col}$.

In this case, the inter-view reference distance of the current block $PU_{curr}$ may be different from the inter-view reference distance of the corresponding block $PU_{col}$. Herein, an inter-view reference distance may be the difference between View IDs.

Referring to Fig. 1, the current block $PU_{curr}$ belongs to View ID 1 and refers to a reference picture $Pic_{ref}$ belonging to View ID 0. That is, the inter-view reference distance of the current block $PU_{curr}$ is the difference between the View IDs, 1.

The corresponding block $PU_{col}$ belongs to View ID 2 and refers to a reference picture $Pic_{ref}$ belonging to View ID 0. That is, the inter-view reference distance of the corresponding block $PU_{col}$ is the difference between the View IDs, 2.

Because the inter-view reference distance of the current block $PU_{curr}$ is different from the inter-view reference distance of the corresponding block $PU_{col}$, it is necessary to scale the motion vector of the corresponding block $PU_{col}$.

An operation for scaling the motion vector of the corresponding block $PU_{col}$ will be described below in more detail.

In the illustrated case of Fig. 1, the MVP of the current block $PU_{curr}$ for encoding or decoding a motion vector

$MV_{curr}$ of the current block $PU_{curr}$ may be acquired by scaling the motion vector $MV_{col}$ of the corresponding block $PU_{col}$.

The operation for scaling the motion vector $MV_{col}$ of the corresponding block $PU_{col}$ is detailed below.

$$\text{Equation 1}$$

$$Diff_{curr} = ViewID_{curr} - ViewID_{ref}$$

$$Diff_{col} = ViewID_{col} - ViewID_{colref}$$

In Equation 1, the inter-view reference distance $Diff_{curr}$ of the current block $PU_{curr}$ is the difference between the View ID $ViewID_{curr}$ of the current block $PU_{curr}$ and the View ID $ViewID_{ref}$ of the reference block of the current block $PU_{curr}$.

The inter-view reference distance $Diff_{col}$ of the corresponding block $PU_{col}$ is the difference between the View ID $ViewID_{col}$ of the corresponding block $PU_{col}$ and the View ID $ViewID_{colref}$ of the reference block of the corresponding block $PU_{col}$.

Therefore, a scale factor to be applied to the motion vector $MV_{col}$ of the corresponding block $PU_{col}$ may be calculated by the following Equation 2.

$$\text{Equation 2}$$

$$ScaleFactor = \frac{Diff_{curr}}{Diff_{col}}$$

Accordingly, the motion vector predictor MVPcurr of the current block $PU_{curr}$ may be calculated by multiplying the motion vector $MV_{col}$ of the corresponding block $PU_{col}$ by the scale factor.

$$\text{Equation 3}$$

$$MVP_{curr} = ScaleFactor \times MV_{col}$$

That is, the motion vector predictor MVPcurr of the current block $PU_{curr}$ may be expressed as the above Equation 3.

Fig. 2 is a conceptual view illustrating a motion vector prediction method according to another embodiment of the present disclosure.

Fig. 2 illustrates a case in which short-term prediction is performed for the current block $PU_{curr}$ and the corresponding block $PU_{col}$. Short-term prediction may mean referring to a picture of the same view apart from a current picture by a temporal difference less than a predetermined temporal difference.

In the illustrated case of Fig. 2, the motion vector predictor MVPcurr of the current block $PU_{curr}$ may be generated by scaling the motion vector $MV_{col}$ of the corresponding block $PU_{col}$ using a ratio between the inter-picture reference distance of the current block $PU_{curr}$ and the inter-picture reference distance of the corresponding block $PU_{col}$. An inter-picture reference distance may be a Picture Order Count (POC) difference according to a time order.

The operation for scaling the motion vector $MV_{col}$ of the corresponding block $PU_{col}$ is described below in greater detail.

$$\text{Equation 4}$$

$$Diff_{curr} = POC_{curr} - POC_{ref}$$

$$Diff_{col} = POC_{col} - POC_{colref}$$

In Equation 4, the inter-picture reference distance $Diff_{curr}$ of the current block $PU_{curr}$ is the difference between the POC $POC_{curr}$ of the current picture to which the current block $PU_{curr}$ belongs and the POC $POC_{ref}$ of a reference picture to which a reference block referred to for the current block $PU_{curr}$ belongs.

The inter-view reference distance $Diff_{col}$ of the corresponding block $PU_{col}$ is the difference between the POC $POC_{col}$ of the corresponding picture to which the corresponding block $PU_{col}$ belongs and the POC $POC_{colref}$ of a reference picture to which a reference block referred to for the corresponding block $PU_{col}$ belongs.

A scale factor to be applied to the motion vector $MV_{col}$ of the corresponding block $PU_{col}$ may be calculated by the following Equation 5.

$$\text{Equation 5}$$

$$\text{ScaleFactor} = \frac{\text{Diff}_{curr}}{\text{Diff}_{col}}$$

Accordingly, the motion vector predictor MVPcurr of the current block $PU_{curr}$ may be calculated by multiplying the motion vector $MV_{col}$ of the corresponding block $PU_{col}$ by the scale factor.

$$\text{Equation 6}$$

$$MVP_{curr} = \text{ScaleFactor} \times MV_{col}$$

That is, the MVP MVPcurr of the current block $PU_{curr}$ may be expressed as the above Equation 6.

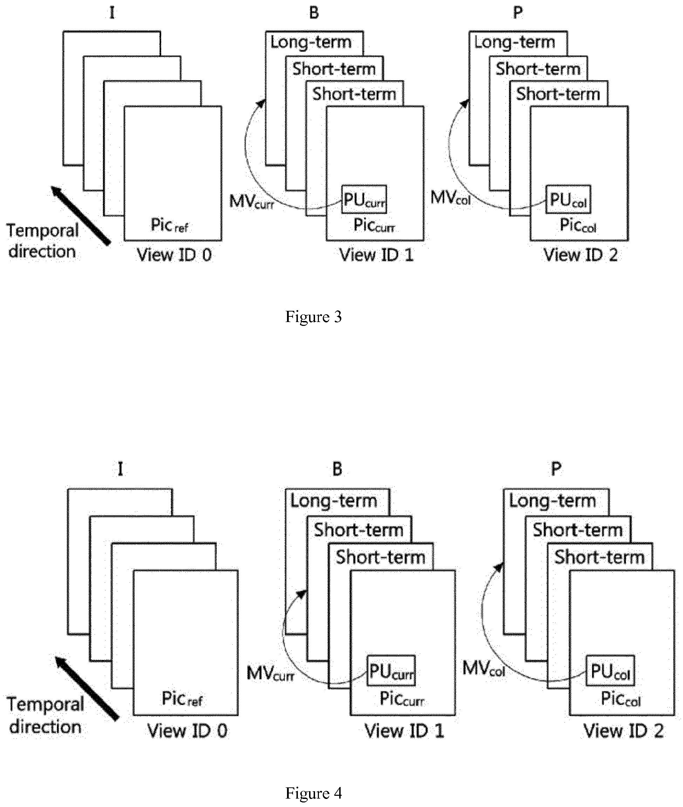

Fig. 3 is a conceptual view illustrating a motion vector prediction method according to another embodiment of the present disclosure.

Fig. 3 illustrates a case in which long-term prediction is performed for the current block $PU_{curr}$ and the corresponding block $PU_{col}$. Long-term prediction may mean referring to a picture of the same view apart from a current picture by a temporal difference equal to or larger than a predetermined temporal difference.

When long-term prediction is performed for the current block $PU_{curr}$ and the corresponding block $PU_{col}$, the motion vector $MV_{col}$ of the corresponding block $PU_{col}$ may be generated as the motion vector predictor $MVP_{curr}$ of the current block $PU_{curr}$.

$$\text{Equation 7}$$

$$MVP_{curr} = MV_{col}$$

That is, the motion vector predictor MVPcurr of the current block $PU_{curr}$ may be equal to the motion vector $MV_{col}$ of the corresponding block $PU_{col}$, as depicted in Equation 7.

It may be concluded that once the motion vector predictor MVPcurr of the current block $PU_{curr}$ is determined according to Figs. 1, 2, and 3, a Motion Vector Difference (MVD) $MVD_{curr}$ of the current block $PU_{curr}$ may be determined.

$$\text{Equation 8}$$

$$MVD_{curr} = MV_{curr} - MVP_{curr}$$

That is, the MVD $MVD_{curr}$ of the current block $PU_{curr}$ may be determined by Equation 8. Thus, the motion vector of the current block may be recovered by adding the MVP of the current block to the MVD of the current block.

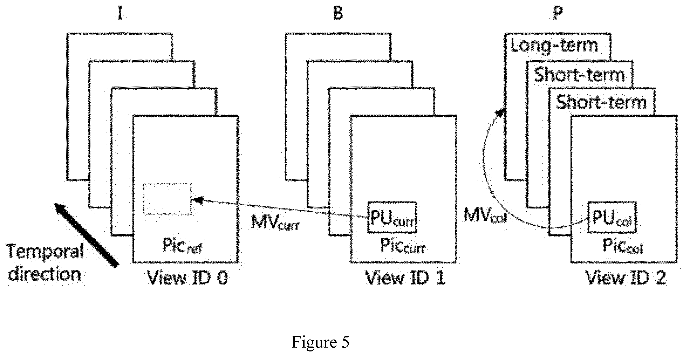

Figs. 4 and 5 are conceptual views illustrating motion vector prediction methods according to other embodiments of the present disclosure.

Fig. 4 illustrates a case in which short-term prediction is performed for the current block $PU_{curr}$, and long-term prediction is performed for the corresponding block $PU_{col}$.

Fig. 5 illustrates a case in which inter-view prediction is performed for the current block $PU_{curr}$, and long-term prediction is performed for the corresponding block $PU_{col}$.

If different prediction schemes are performed for the current block $PU_{curr}$ and the corresponding block $PU_{col}$ as illustrated in Figs. 4 and 5, the motion vector $MV_{col}$ of the corresponding block $PU_{col}$ may not be used in generating the MVP $MVP_{curr}$ of the current block $PU_{curr}$.

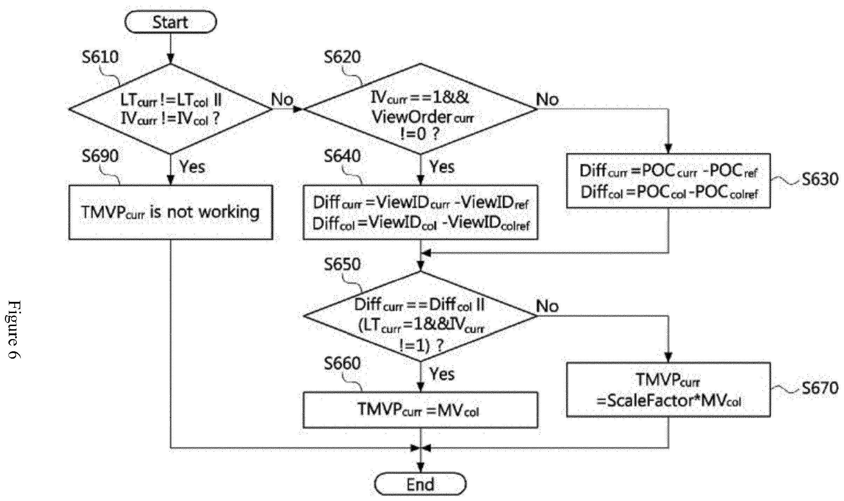

Fig. 6 is a flowchart illustrating a motion vector prediction method according to an embodiment of the present disclosure.

Referring to Fig. 6, the motion vector prediction method according to the embodiment of the present disclosure includes determining motion prediction schemes performed for a current block and a corresponding block corresponding to the current block, and generating an MVP of the current block based on a motion vector of the corresponding block according to the determined motion vector prediction method

It may be determined that one of long-term prediction, short-term prediction, and inter-view prediction is performed for each of the current block and the corresponding block.

That is, data for video decoding may be generated by decoding a received bit stream, and the motion prediction schemes performed for the current block and the corresponding block may be determined using the data for video decoding. For example, the motion prediction schemes may be determined using at least one of View ID information, View Order information, and flag information for identifying a motion prediction scheme, included in the data for video decoding. The data for video decoding may be acquired by performing entropy decoding, dequantization, and inverse-transform on the received bit stream.

If long-term prediction is performed for the current block and the corresponding block, the motion vector of the corresponding block may be generated as the MVP of the current block.

Further, if short-term prediction is performed for the current block and the corresponding block, the MVP of the current block may be generated by scaling the motion vector of the corresponding block using a ratio between the inter-picture reference distance of the current block and the inter-picture reference distance of the corresponding block.

If inter-view prediction is performed for the current block and the corresponding block, the MVP of the current block may be generated by scaling the motion vector of the corresponding block using a ratio between the inter-view reference distance of the current block and the inter-view reference distance of the corresponding block.

On the other hand, if inter-view prediction is performed for one of the current block and the corresponding block and long-term prediction or short-term prediction is performed for the other block, or if long-term prediction is performed for one of the current block and the corresponding block and short-term prediction is performed for the other block, the motion vector of the corresponding block may not be used in calculating the MVP of the current block.

In the case where the motion vector of the corresponding block is not used sincemotion prediction schemes for the current block and the corresponding block are different from each other, a predetermined vector may be generated as the MVP of the current block. For example, the predetermined vector may be set equal to (0, 0).

Accordingly, the Temporal Motion Vector Predictors (TMVPs) of the current block are listed in [Table 1] below according to correlation between motion prediction scheme for the current block and motion prediction scheme for the corresponding block.

[Table 1]

| Current block | Co-located block | TMVP |
|---|---|---|
| Inter-view prediction | Inter-view vector | Scaled TMVP based on VicwID |
| Non Inter-view vector | Inter-view vector | Not use TMVP |
| Inter-view vector | Non Inter-view vector | Not use TMVP |
| Non Inter-view vector (Short-term) | Non Inter-view vector (Short-term) | Scaled TMVP based on POC |
| Non Inter-view vector (Short-term) | Non Inter-view vector (long-term) | Not use TMVP |
| Non Inter-view vector (long-term) | Non Inter-view vector (Short-term) | Not use TMVP |
| Non Inter-view vector (long-term) | Non Inter-view vector (long-term) | $\text{TMVP}_{curr} = MV_{col}$ |

Before a description of the flowchart illustrated in Fig. 6, each parameter is defined as listed in [Table 2].

[Table 2]

| | | |
|---|---|---|
| $LT_{curr}$ | 1 if the reference picture of $PU_{curr}$ is a long-term reference, and 0 if the reference picture of $PU_{curr}$ is not a long-term reference. | |
| $LT_{col}$ | 1 if the reference picture of $PU_{col}$ is a long-term reference, and 0 if the reference picture of $PU_{col}$ is not a long-term reference. | |
| $IV_{curr}$ | 1 if $MV_{curr}$ is an inter-view motion vector, and 0 if $MV_{curr}$ is not an inter-view motion vector. | |
| $IV_{col}$ | 1 if $MV_{col}$ is an inter-view motion vector, and 0 if $MV_{col}$ is not an inter-view motion vector. | |
| Base View Flag$_{curr}$ | 1 if $Pic_{curr}$ is a base view, and 0 if $Pic_{curr}$ is not a base view | |
| $POC_{curr}$ | POC of $Pic_{curr}$ | |
| $POC_{ref}$ | POC of $Pic_{ref}$ | |

(continued)

| | |
|---|---|
| POC$_{col}$ | POC of Pic$_{col}$ |
| POC$_{colref}$ | POC of reference picture of Pic$_{col}$ |
| ViewID$_{curr}$ | View ID of Pic$_{curr}$ |
| ViewID$_{ref}$ | View ID of Pic$_{ref}$ |
| ViewID$_{col}$ | View ID of Pic$_{col}$ |
| ViewID$_{colref}$ | View ID of reference picture of Pic$_{col}$ |

The motion vector prediction method for a multi-view video according to the embodiment of the present disclosure will be described in greater detail with reference to Fig. 6.

If LT$_{curr}$ is different from LT$_{col}$ in step S610, this implies that the reference picture indicated by MV$_{curr}$ is marked differently from the the reference picture indicated by MV$_{col}$. For example, a short-term reference picture is referred to for MV$_{curr}$ and a long-term reference picture is referred to for MV$_{col}$. In this case, a TMVP may not be used (S690).

If IV$_{curr}$ is different from IV$_{col}$ in step S610, this implies that MV$_{curr}$ and MV$_{col}$ have different properties. For example, MV$_{curr}$ is an inter-view motion vector, and MV$_{col}$ is a temporal motion vector. In this case, a TMVP may not be used (S690).

If IV$_{curr}$ is '1' in step S620, this implies that both MV$_{curr}$ and MV$_{col}$ are inter-view motion vectors, and scaling is possible with the difference between View IDs (S640).

If IV$_{curr}$ is '0' in step S620, this implies that both MV$_{curr}$ and MV$_{col}$ are temporal motion vectors, and scaling is possible with the difference between POCs (S630).

Herein, if BaseViewFlag$_{curr}$ is '0', this may mean that Pic$_{curr}$ is not a base view.

If Diffcurr is different from Diffcol, and IV$_{curr}$ is '1' or LT$_{curr}$ is '0' in step S650, MV$_{col}$ is scaled for TMVP$_{curr}$ (S670).

If Diffcurr is equal to Diff$_{col}$ in step S650, TMVP$_{curr}$ may be set to MV$_{col}$ (S660).

If long-term reference pictures are referred to for both the current block PU$_{curr}$ and the corresponding block PU$_{col}$ and inter-view prediction is not used for both the current block PU$_{curr}$ and the corresponding block PU$_{col}$ in step S650, TMVP$_{curr}$ may be set to MV$_{col}$ (S660).

Embodiment 2 (not covered by the claimed invention) - Method for Encoding and Decoding Residual through

**Residual Prediction**

A multi-view video may be encoded and decoded through residual prediction. Advanced Residual Prediction (ARP) for a multi-view video may mean a process of generating a residual through motion prediction of a current block and generating a prediction residual by performing prediction on the generated residual.

Accordingly, a method for encoding and decoding a residual through residual prediction may mean encoding and decoding a residual difference generated by subtracting a prediction residual from a residual of a current block.

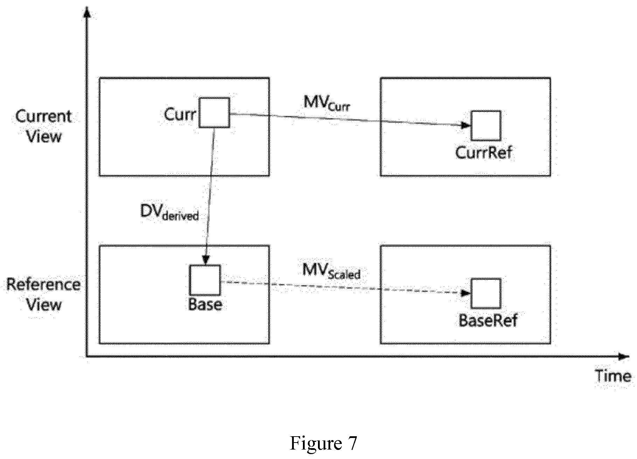

Fig. 7 is a conceptual view illustrating a residual prediction method according to an embodiment of the present disclosure.

Referring to Fig. 7, a view to which a current block Curr belongs is referred to as a current view, and a view referred to for the current view is referred to as a reference view.

Let a reference block of the same view, referred to for the current block Curr be denoted by CurrRef, a residual signal R may be calculated by Equation 9. Herein, the motion vector of the current block Curr may be denoted by MV$_{Curr}$.

That is, the residual signal R may be calculated by subtracting the reference block CurrRef from the current block Curr, according to Equation 9.

**[149]** Equation 9

$$R(i, j) = Curr(i, j) - CurrRef(i, j)$$

The residual signal R may further eliminate redundancy using a similarity between views. A corresponding block Base corresponding to the current block Curr may be detected using a disparity vector DVderived at a reference view.

A reference block BaseRef referred to for the corresponding block Base in the temporal direction may be detected using MV$_{Scaled}$ generated by scaling the motion vector MV$_{Curr}$ of the current block Curr.

In this case, a picture to which the reference block BaseRef referred to for the corresponding block Base belongs may be a picture having a smallest POC difference from a picture to which the corresponding block Base belongs, in a reference picture list for the picture to which the corresponding block Base belongs, except for a picture having the same POC as the picture to which the corresponding block Base belongs.

$MV_{Scaled}$ may be calculated by Equation 10 and Equation 11.

Equation 10

$$DiffPOC_{curr} = POC_{Curr} - POC_{CurrRef}$$

$$DiffPOC_{Base} = POC_{Base} - POC_{BaseRef}$$

$$\text{ScaleFactor} = \frac{DiffPOC_{Base}}{DiffPOC_{Curr}}$$

In Equation 10, a temporal reference distance of the current block Curr may be denoted by $DiffPOC_{Curr}$, and $DiffPOC_{Curr}$ may be calculated to be the difference between the POC $POC_{Curr}$ of the current block Curr and the POC $POC_{Curref}$ of the reference block CurrRef referred to for the current block Curr in the temporal direction.

Further, a temporal reference distance of the corresponding block Base may be denoted by $DiffPOC_{Base}$, and $DiffPOC_{Base}$ may be calculated to be the difference between the POC $POC_{Base}$ of the corresponding block Base and the POC $POC_{Baseref}$ of the reference block BaseRef referred to for the corresponding block Base in the temporal direction.

A scale factor with which to scale the motion vector $MV_{Curr}$ of the current block Curr may be expressed as a ratio between the temporal reference distance of the current block Curr and the temporal reference distance of the corresponding block Base.

Equation 11

$$MV_{Scaled} = \text{ScaleFactor} \times MV_{Curr}$$

Therefore, $MV_{Scaled}$ may be generated by scaling the motion vector $MV_{Curr}$ of the current block Curr with the scale factor, and the reference block BaseRef referred to for the corresponding block Base in the temporal direction may be detected using $MV_{Scaled}$.

Equation 12

$$R'(i,j) = [Base(i,j) - BaseRef(i,j)]$$

A prediction residual signal R' of the current block Curr may be calculated by Equation 12. That is, the prediction residual signal R' may be calculated by subtracting the reference block BaseRef referred to for the corresponding block Base in the temporal direction from the corresponding block Base.

Also, the prediction residual signal R' may be calculated by applying a weight w to the corresponding block Base or the reference block BaseRef, or the prediction residual signal R' of Equation 12 may be set to be larger than a predetermined threshold $\omega$.

Equation 13

$$R_{Final}(i,j) = R(i,j) - R'(i,j)$$

Therefore, a residual difference may be calculated by subtracting the prediction residual signal R' of the current block Curr of Equation 12 from the residual signal R of the current block Curr of Equation 9.

Further, the residual prediction depicted in Fig. 7 and Equation 9 to Equation 13 may be referred to as Temporal ARP (Advanced Presidual Prediction).

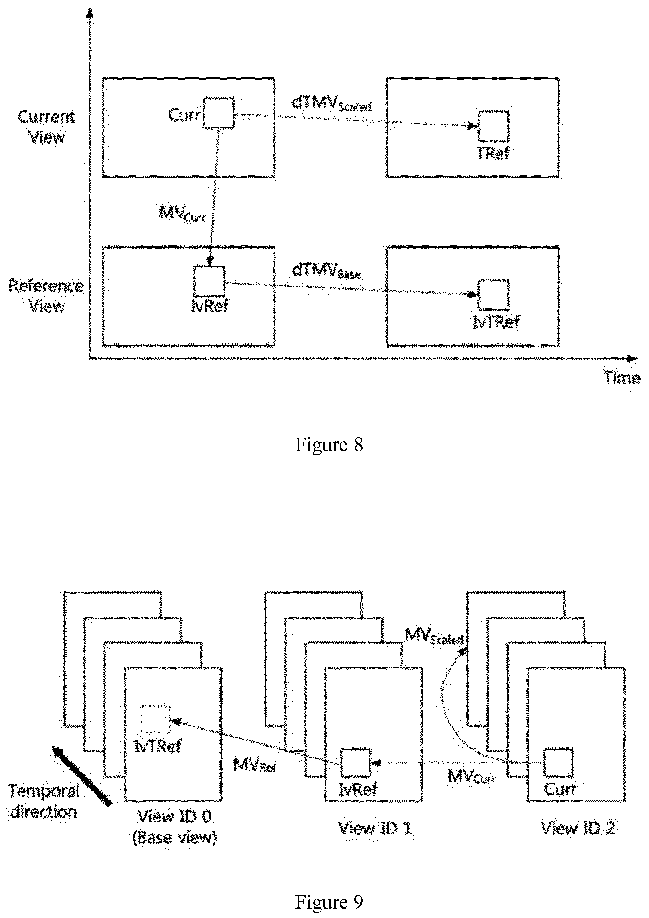

Fig. 8 is a conceptual view illustrating a residual prediction method according to another embodiment of the present disclosure.

Referring to Fig. 8, let a reference block of a different view referred to for the current block Curr be denoted by IvRef. Then, the residual signal R may be calculated by Equation 14. The motion vector of the current block Curr may be denoted by $MV_{Curr}$, and inter-view prediction may be performed using $MV_{Curr}$.

That is, according to Equation 14 below, the residual signal R of the current block Curr may be calculated by subtracting the reference bloc IvRef from the current block Curr.

Equation 14

$$R(i, j) = Curr(i, j) - IvRef(i, j)$$

Referring to Equation 14, the residual signal R may further eliminate redundancy using a similarity between views. The reference block IvRef inter-view-referred to for the current block Curr may be detected using the motion vector $MV_{Curr}$ of the current block Curr at a reference view.

A reference block IvTRef referred to for the reference block IvRef of the current block Curr in the temporal direction may be detected using $dTMV_{Base}$.

Also, a reference block TRef referred to for the current block Curr in the temporal direction may be detected using $dMV_{Scaled}$ generated by scaling $dTMV_{Base}$ used for the reference block IvRef of the current block Curr.

In this case, a picture of the reference block TRef referred to for the current block Curr in the temporal direction may have a smallest POC difference from a picture of the current block Curr in a reference picture list for the picture of the current block Curr, except for a picture having the same POC as the picture of the current block Curr.

$MV_{Scaled}$ may be calculated by Equation 15 and Equation 16.

Equation 15

$$DiffPOC_{curr} = POC_{Curr} - POC_{TRef}$$

$$DiffPOC_{Base} = POC_{IvRef} - POC_{IvTRef}$$

$$ScaleFactor = \frac{DiffPOC_{curr}}{DiffPOC_{Base}}$$

In Equation 15, the temporal reference distance of the current block Curr may be denoted by $DiffPOC_{Curr}$, and $DiffPOC_{Curr}$ may be calculated to be the difference between the POC $POC_{Curr}$ of the current block Curr and the POC $POC_{TRef}$ of the reference block TRef referred to for the current block Curr in the temporal direction.

Further, the temporal reference distance of the reference block IvRef may be denoted by $DiffPOC_{Base}$, and $DiffPOC_{Base}$ may be calculated to be the difference between the POC $POC_{IvRef}$ of the reference block IvRef and the POC $POC_{IvTRef}$ of the reference block IvTRef referred to for the reference block IvRef in the temporal direction.

A scale factor with which to scale the motion vector $dTMV_{Base}$ of the reference block IvRef may be expressed as a ratio between the temporal reference distance of the current block Curr and the temporal reference distance of the corresponding block Base.

Equation 16

$$dTMV_{Scaled} = ScaleFactor \times dTMV_{Base}$$

Therefore, $dTMV_{Scaled}$ may be generated by scaling the motion vector $dTMV_{Base}$ of the reference block IvRef with the scale factor, as expressed in Equation 16, and the reference block TRef referred to for the current block Curr in the temporal direction may be detected using $dTMV_{Scaled}$.

Equation 17

$$R'(i, j) = [TRef(i, j) - IvTRef(i, j)]$$

The prediction residual signal R' of the current block Curr may be calculated by Equation 17. That is, the prediction residual signal R' may be calculated by subtracting the reference block IvTRef referred to for the reference block IvRef of the current block Curr in the temporal direction from the reference block TRef referred to for the current block Curr in the temporal direction.

Also, the prediction residual signal R' may be calculated by applying the weight w to the reference block TRef or IvTRef, or the prediction residual signal R' of Equation 17 may be set to be larger than the predetermined threshold ω.

Equation 18

$$R_{Final}(i,j) = R(i,j) - R'(i,j)$$

Therefore, the residual difference may be calculated by subtracting the prediction residual signal R' of the current block Curr of Equation 17 from the residual signal R of the current block Curr of Equation 14. This residual difference may be referred to as a final residual $R_{Final}$ as in Equation 18.

Further, the residual prediction depicted in Fig. 8 and Equation 14 to Equation 18 may be referred to as Inter-view ARP.

Fig. 9 is a conceptual view illustrating a residual prediction method according to another embodiment of the present disclosure.

Referring to Fig. 9, a reference block IvRef of View ID 1 inter-view-referred to for the current block Curr may be detected using the motion vector $MV_{Curr}$.

Compared to the case of Fig. 8, a reference block IvTRef of a different view referred to for the reference block IvRef of the current block Curr may be detected using a motion vector $MV_{Ref}$ in the illustrated case of Fig. 9.

In this case, a problem occurs in generating $MV_{Scaled}$ by scaling $MV_{Ref}$ used for the reference block IvRef of the current block Curr. That is, this is because $MV_{Ref}$ is a motion vector used for inter-view prediction, whereas $MV_{Scaled}$ is a vector used for temporal motion prediction.

More specifically, since $MV_{Ref}$ is a motion vector used for inter-view prediction, a denominator depicted in Equation 15 becomes 0 and, as a result, the scale factor is calculated to be an infinite value.

Equation 19

$$MV_{Scaled} = \text{ScaleFactor} \times MV_{Ref}$$

Therefore, since an error may occur during calculation of $MV_{Scaled}$ by Equation 19, the error may be prevented by setting $MV_{Scaled}$ to (0, 0).

Figs. 8 and 9 will be described below on the assumption that the reference block IvRef is a first reference block, the reference block TRef is a second reference block, and the reference block IvTRef is a third reference block.

The residual prediction method includes determining a motion prediction scheme performed for the first reference block referred to for inter-preview prediction of the current block, and generating a prediction residual for the current block according to the motion prediction scheme of the first reference block.

It may be determined which one of temporal motion prediction and inter-view prediction is performed for the first reference block.

The difference between the second reference block referred to for temporal motion prediction of the current block and the third reference block referred to for the first reference block may be generated as the prediction residual. Herein, the second reference block may belong to a picture closest in the temporal direction in a reference list for a current picture to which the current block belongs.

If it is determined that temporal motion prediction is performed for the first reference block, a scaled motion vector may be generated by applying a scale vector to a motion vector used to search for the third reference block, and the second reference block may be determined using the scaled motion vector. The scale factor may be generated based on the difference between the number of a reference picture to which the first reference block belongs and the number of a picture to which the third reference block referred to for temporal motion prediction of the first reference block belongs, and the difference between the number of a picture to which the current block belongs and the number of a picture to which the second reference block belongs.

On the other hand, if it is determined that inter-view prediction is performed for the first reference block, the second reference block may be determined by applying (0, 0) as the motion vector used to search for the second reference block.

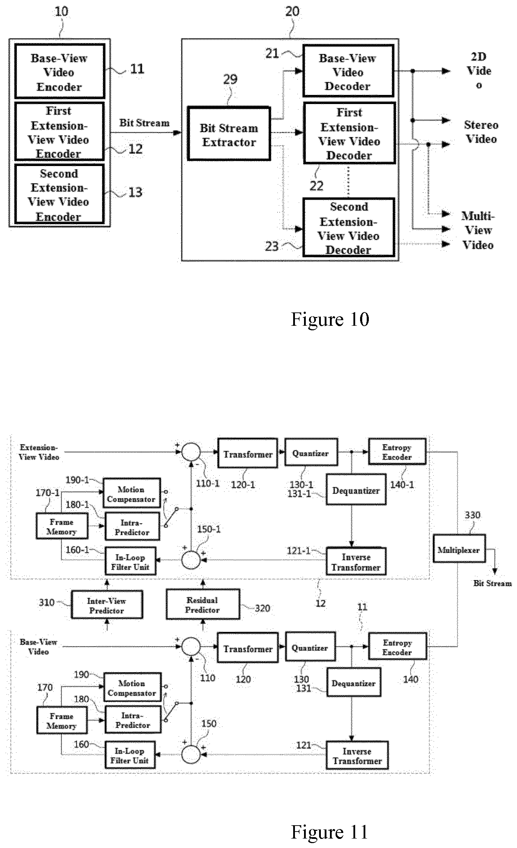

Fig. 10 is a block diagram of an apparatus for encoding a multi-view video and an apparatus for decoding a multi-view video according to an embodiment of the present disclosure.

Referring to Fig. 10, a system for encoding/decoding a multi-view video according to an embodiment of the present disclosure includes a multi-view video encoding apparatus 10 and a multi-view video decoding apparatus 20.

The multi-view video encoding apparatus 10 may include a base-view video encoder 11 for encoding a base-view video, and extension-view video encoders 12 and 13 for encoding an extension-view video. A base-view video may be a video for providing a 2D single-view video, and an extension-view video may be a video for providing a video of an extended view like 3D.

For example, the multi-view video encoding apparatus 10 may include the base-view video encoder 11, a first extension-view video encoder 12, and a second extension-view video encoder 13. The extension-view video encoders are not limited to the first and second extension-view video encoders 12 and 13. Rather, the number of extension-view video encoders may increase with the number of views. Further, the base-view video encoder 11 and the extension-view video encoders 12 and 13 may encode a color image and a depth image(depth map) separately.

The multi-view video encoding apparatus 10 may transmit a bit stream obtained by encoding a multi-view video to the multi-view video decoding apparatus 20.

The multi-view video decoding apparatus 20 may include a bit stream extractor 29 a base-view video decoder 21, and extension-view video decoders 22 and 23.

For example, the multi-view video decoding apparatus 20 may include the base-view video decoder 21, a first extension-view video decoder 22, and a second extension-view video decoder 23. Obviously, the number of extension-view video decoders may increase with the number of views.

Specifically, the bit stream extractor 29 may separate a bit stream according to views, and provide the separated bit streams to the base-view video decoder 21, and the extension-view video decoders 22 and 23, respectively.

According to an embodiment of the present disclosure, a decoded base-view video may be displayed on a legacy 2D display, with backward compatibility. Also, the decoded base-view video and at least one decoded extension-view video may be displayed on a stereo display or a multi-view display.

Meanwhile, input camera position information may be transmitted as side information in a bit stream to the stereo display or the multi-view display.

Fig 11 is a block diagram of an apparatus for encoding a multi-view video according to an embodiment of the present disclosure.

Referring to Fig. 11, the multi-view video encoding apparatus 10 according to the embodiment of the present disclosure may include the base-view video encoder 11 and the extension-view video encoder 12. However, the multi-view video encoding apparatus 10 may further include another extension-view video encoder according to a view.

Each of the base-view video encoder 11 and the extension-view video encoder 12 includes a subtractor 110 or 110-1, a transformer 120 or 120-1, a quantizer 130 or 130-1, a dequantizer 131 or 131-1, an inverse transformer 121 or 121-1, an entropy encoder 140 or 140-1, an adder 150 or 150-1, an in-loop filter unit 160 or 160-1, a frame memory 170 or 170-1, an intra-predictor 180 or 180-1, and a motion compensator 190 or 190-1.

The subtractor 110 or 110-1 generates a residual image between a received image to be encoded (a current image) and a prediction image generated through intra-prediction or inter-prediction by subtracting the prediction image from the current image.

The transformer 120 or 120-1 transforms the residual image generated by the subtractor 110 or 110-1 from the spatial domain to the frequency domain. The transformer 120 or 120-1 may transform the residual image to the frequency domain by a technique of transforming a spatial video signal to a frequency video signal, such as Hadamard transform, discrete cosine transform, or discrete sine transform.

The quantizer 130 or 130-1 quantizes the transformed data (frequency coefficients) received from the transformer 120 or 120-1. That is, the quantizer 130 or 130-1 quantizes the frequency coefficients being the data transformed by the transformer 120 or 120-1 by dividing the frequency coefficients by a quantization step size, and thus obtains quantization result values.

The entropy encoder 140 or 140-1 generates a bit stream by entropy-encoding the quantization result values calculated by the quantizer 130 or 130-1. Also, the entropy encoder 140 or 140-1 may entropy-encode the quantization result values calculated by the quantizer 130 or 130-1 using Context-Adaptive Variable Length Coding (CAVLC) or Context-Adaptive Binary Arithmetic Coding (CABAC) , and may further entropy-encode information required for video decoding in addition to the quantization result values.

The dequantizer 131 or 131-1 dequantizes the quantization result values calculated by the quantizer 130 or 130-1. That is, the dequantizer 131 or 13-1 recovers frequency-domain values (frequency coefficients) from the quantization result values.

The dequantizer 121 or 121-1 recovers the residual image by transforming the frequency-domain values (frequency coefficients) received from the dequantizer 131 or 131-1 to the spatial domain. The adder 150 or 150-1 generates a recovered image of the input image by adding the residual image recovered by the dequantizer 121 or 121-1 to the prediction image generated through intra-prediction or inter-prediction, and stores the recovered image in the memory 170 or 170-1.

The intra-predictor 180 or 180-1 performs intra-prediction, and the motion compensator 190 or 190-1 compensates a motion vector for inter-prediction. The intra-predictor 180 or 180-1 and the motion compensator 190 or 190-1 may be collectively referred to as a prediction unit.

According to an embodiment of the present disclosure, the predictors 180-1 and 190-1 included in the extension-view video encoder 12 may perform prediction for a current block of an extension view using prediction information about a reference block of a reference view. The reference view refers to a view referred to for the extension view and may be a base view. Also, the prediction information may include prediction mode information and motion information about a reference block.

The in-loop filter unit 160 or 160-1 filters the recovered image. The in-loop filter unit 160 or 160-1 may include a Deblocking Filter (DF) and a Sample Adaptive Offset (SAO).

A multiplexer 330 may receive a bit stream of the encoded base-view video and a bit stream of the encoded extension-view video and thus output an extended bit stream.

Particularly, the multi-view video encoding apparatus 10 according to the embodiment of the present disclosure may further include an inter-view predictor 310 and a residual predictor 320.

While the inter-view predictor 310 and the residual predictor 320 are shown in Fig. 11 as residing between the base-view video encoder 11 and the extension-view video encoder 12, the present disclosure is not limited to this structure or position.

The inter-view predictor 310 may interwork with the motion compensator 190 or 190-1, and encode a motion vector for a multi-view video through motion vector prediction according to the afore-described first embodiment of the present disclosure.

The residual predictor 320 may interwork with the motion compensator 190 or 190-1 and the intra-predictor 180 or 180-1, and encode a residual for a multi-view video through residual prediction according to the afore-described second embodiment of the present disclosure.

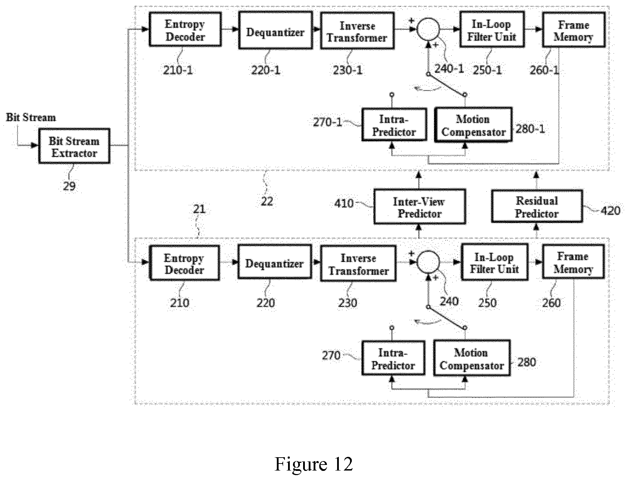

Fig. 12 is a block diagram of a multi-view video decoding apparatus according to an embodiment of the present disclosure.

Referring to Fig. 12, the multi-view video decoding apparatus 20 may include the bit stream extractor 29, the base-view video decoder 21, and the extension-view video decoders 22 and 23.

The bit stream extractor 29 may separate a bit stream according to views and provide the separated bit streams to the base-view video decoder 21 and the extension-view video decoders 22 and 23, respectively.

Each of the base-view video decoder 21 and the extension-view video decoders 22 and 23 may include an entropy decoder 210 or 210-1, a dequantizer 220 or 220-1, an inverse transformer 230 or 230-2, an adder 240 or 240-1, an in-loop filter unit 250 or 250-1, a frame memory 260 or 260-1, an intra-predictor 270 or 270-1, and a motion compensator 280 or 280-1. The intra-predictor 270 or 270-1 and the motion compensator 280 or 280-1 may be collectively referred to as a prediction unit.

The multi-view video decoding apparatus 20 according to the embodiment of the present disclosure may further include an inter-view predictor 410 and a residual predictor 420.

While the inter-view predictor 410 and the residual predictor 420 are shown in Fig. 12 as residing between the base-view video decoder 21 and the extension-view video decoder 22, the present disclosure is not limited to this structure or position.

The inter-view predictor 410 may interwork with the motion compensator 290 or 290-1, and decode a motion vector for a multi-view video through motion vector prediction according to the afore-described first embodiment of the present disclosure.

The residual predictor 420 may interwork with the motion compensator 290 or 290-1 and the intra-predictor 280 or 280-1, and decode a residual for a multi-view video through residual prediction according to the afore-described second embodiment of the present disclosure.

Meanwhile, each component of the multi-view video decoding apparatus 20 may be understood from its counterpart of the multi-view video encoding apparatus 10 illustrated in Fig. 11 and thus will not be described herein in detail.

Further, each component of the multi-view video encoding apparatus 10 and the multi-view video decoding apparatus 20 according to the embodiments of the present disclosure has been described as configured as a separate component, for the convenience of description. However, at least two of the components may be incorporated into a single processor or one component may be divided into a plurality of processors, for executing a function. Embodiments of incorporating components or separating a single component also fall into the appended claims without departing the scope of the present disclosure.

The multi-view video encoding apparatus 10 and the multi-view video decoding apparatus 20 according to the present disclosure may be implemented as a computer-readable program or code on a computer-readable recoding medium. The computer-readable recording medium includes any kind of recording device that stores data readable by a computer system. Also, the computer-readable recording medium may be distributed to computer systems connected through a network and store and execute a program or code readable by a computer in a distributed manner.

The method for performing motion vector prediction for a multi-view video according to the first embodiment of the present disclosure enables effective encoding/decoding of a motion vector during encoding/decoding of a multi-view video. That is, according to the present disclosure, a temporal motion vector can be predicted adaptively according to motion vector prediction schemes used for a current block and a corresponding block.

The method for performing residual prediction for a multi-view video according to the second embodiment of the present disclosure enables effective encoding/decoding of a residual during encoding/decoding of a multi-view video. That is, an error can be prevented from occurring in calculation of a scale factor used to scale a motion vector during generation of a prediction residual, thereby preventing an error in residual prediction for a multi-view video.

Although the present disclosure has been described with reference to the preferred embodiments, those skilled in the art will appreciate that various modifications and variations can be made in the present disclosure without departing from the scope of the present disclosure described in the appended claims.

**Claims**

1. A method for decoding a multi-view video, the method comprising:

    determining motion prediction schemes performed for a current block to be decoded and a co-located block corresponding to the current block, the motion prediction schemes are determined to be one of a long-term prediction, a short-term prediction and an inter-view prediction; and
    generating a motion vector of the current block using a motion vector of the co-located block according to the determined motion prediction schemes,
    wherein when the inter-view prediction is performed for one of the current block and the co-located block and then the long-term prediction or the short-term prediction is performed for the other block, the motion vector of the current block is generated using a predetermined vector or the motion vector of the co-located block,
    wherein the co-located block includes a temporal co-located block.

2. The method according to claim 1, wherein generating the motion vector of the current block comprises, when the long-term prediction is performed for the current block and the co-located block, generating the motion vector of the current block as the motion vector of the co-located block.

3. The method according to claim 1, wherein generating the motion vector of the current block comprises, when the short-term prediction is performed for the current block and the co-located block, generating the motion vector of the current block by scaling the motion vector of the co-located block using a ratio between an inter-picture reference distance of the current block and an inter-picture reference distance of the co-located block.

4. The method according to claim 1, wherein generating the motion vector of the current block comprises, when the inter-view prediction is performed for the current block and the co-located block, generating the motion vector of the current block by scaling the motion vector of the co-located block using a ratio between an inter-view reference distance of the current block and an inter-view reference distance of the co-located block.

5. The method according to claim 1, wherein the predetermined vector is (0, 0).

**Patentansprüche**

1. Verfahren zum Decodieren eines Mehrfachansichtvideos, wobei das Verfahren Folgendes umfasst:

    Bestimmen von Bewegungsvorhersageschemata, die für einen aktuellen Block, der decodiert werden soll, und einen ortsgleichen Block, der dem aktuellen Block entspricht, durchgeführt werden, wobei die Bewegungsvorhersageschemata als eine einer Langzeitvorhersage, einer Kurzzeitvorhersage und einer Zwischenansichtvorhersage bestimmt werden; und
    Erzeugen eines Bewegungsvektors des aktuellen Blocks unter Verwendung eines Bewegungsvektors des ortsgleichen Blocks gemäß den bestimmten Bewegungsvorhersageschemata, wobei
    dann, wenn die Zwischenansichtvorhersage für einen des aktuellen Blocks und des ortsgleichen Blocks durchgeführt wird, die Langzeitvorhersage oder die Kurzzeitvorhersage für den weiteren Block durchgeführt wird, wobei der Bewegungsvektor des aktuellen Blocks unter Verwendung eines vorgegebenen Vektors oder des Bewegungsvektors des ortsgleichen Blocks erzeugt wird, und
    der ortsgleiche Block einen zeitgleichen Block enthält.

**2.** Verfahren nach Anspruch 1, wobei das Erzeugen des Bewegungsvektors des aktuellen Blocks dann, wenn die Langzeitvorhersage für den aktuellen Block und den ortsgleichen Block durchgeführt wird, ein Erzeugen des Bewegungsvektors des aktuellen Blocks als den Bewegungsvektor des ortsgleichen Blocks umfasst.

**3.** Verfahren nach Anspruch 1, wobei das Erzeugen des Bewegungsvektors des aktuellen Blocks dann, wenn die Kurzzeitvorhersage für den aktuellen Block und den ortsgleichen Block durchgeführt wird, ein Erzeugen des Bewegungsvektors des aktuellen Blocks durch Skalieren des Bewegungsvektors des ortsgleichen Blocks unter Verwendung eines Verhältnisses zwischen einer bildübergreifenden Bezugsentfernung des aktuellen Blocks und einer bildübergreifenden Bezugsentfernung des ortsgleichen Blocks umfasst.

**4.** Verfahren nach Anspruch 1, wobei das Erzeugen des Bewegungsvektors des aktuellen Blocks dann, wenn die Zwischenansichtvorhersage für den aktuellen Block und den ortsgleichen Block durchgeführt wird, ein Erzeugen des Bewegungsvektors des aktuellen Blocks durch Skalieren des Bewegungsvektors des ortsgleichen Blocks unter Verwendung eines Verhältnisses zwischen einer Zwischenansichtbezugsentfernung des aktuellen Blocks und einer Zwischenansichtbezugsentfernung des ortsgleichen Blocks umfasst.

**5.** Verfahren nach Anspruch 1, wobei der vorgegebene Vektor (0, 0) ist.


**Revendications**

**1.** Procédé pour décoder une vidéo multivue, le procédé comprenant les opérations suivantes:

déterminer les schémas de prédiction de mouvement exécutés pour un bloc courant à décoder et un bloc co-localisé correspondant au bloc courant, les schémas de prédiction de mouvement sont déterminés comme étant l'un d'une prédiction à long terme, d'une prédiction à court terme et d'une prédiction inter-vues ; et générer un vecteur de mouvement du bloc actuel en utilisant un vecteur de mouvement du bloc colocalisé selon les schémas de prédiction de mouvement déterminés, dans lequel, lorsque la prédiction inter-vues est effectuée pour l'un du bloc actuel et du bloc co-localisé, puis la prédiction à long terme ou la prédiction à court terme est effectuée pour l'autre bloc, le vecteur de mouvement du bloc actuel est généré en utilisant un vecteur prédéterminé ou le vecteur de mouvement du bloc co-localisé,

dans lequel le bloc co-localisé comprend un bloc co-localisé temporel.

**2.** Procédé selon la revendication 1, dans lequel la génération du vecteur de mouvement du bloc actuel comprend, lorsque la prédiction à long terme est effectuée pour le bloc actuel et le bloc co-localisé, la génération du vecteur de mouvement du bloc actuel en tant que vecteur de mouvement du bloc co-localisé.

**3.** Procédé selon la revendication 1, dans lequel la génération du vecteur de mouvement du bloc actuel comprend, lorsque la prédiction à court terme est effectuée pour le bloc actuel et le bloc co-localisé, la génération du vecteur de mouvement du bloc actuel en mettant à l'échelle le vecteur de mouvement du bloc co-localisé en utilisant un rapport entre une distance de référence inter-images du bloc actuel et une distance de référence inter-images du bloc co-localisé.

**4.** Procédé selon la revendication 1, dans lequel la génération du vecteur de mouvement du bloc actuel comprend, lorsque la prédiction inter-vues est effectuée pour le bloc actuel et le bloc co-localisé, la génération du vecteur de mouvement du bloc actuel en mettant à l'échelle le vecteur de mouvement du bloc co-localisé en utilisant un rapport entre une distance de référence inter-vues du bloc actuel et une distance de référence inter-vues du bloc co-localisé.

**5.** Procédé selon la revendication 1, dans lequel le vecteur prédéterminé est (0, 0).

Figure 1

Figure 2

Figure 3

Figure 4

Figure 5

Figure 6

Figure 7

Figure 8

Figure 9

Figure 10

Figure 11

Figure 12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Test Model 6 of 3D-HEVC and MV-HEVC. **ZHANG L et al.** JCT-3V MEETING. THE JOINT COLLABORATIVE TEAM ON 3D VIDEO CODING EXTENSION DEVELOPMENT OF ISO/IEC JTC1/SC29/WG11 AND ITU-T SG.16, 25 October 2013, vol. 6
- 3D-HEVC Draft Text 2. **TECH G et al.** JCT-3V MEETING. THE JOINT COLLABORATIVE TEAM ON 3D VIDEO CODING EXTENSION DEVELOPMENT OF ISO/IEC JTC1/SC29/ WG11 AND ITU-T SG.16, 25 October 2013, vol. 6

- CE4: Further improvements on advanced residual prediction. **ZHANG L et al.** JCT-3V MEETING. THE JOINT COLLABORATIVE TEAM ON 3D VIDEO CODING EXTENSION DEVELOPMENT OF ISO/IEC JTC1/SC29/WG11 AND ITU-T SG.16, 25 October 2013, vol. 6
- 3D-CE4: Results on improved advanced residual prediction. **ZHANG K et al.** JCT-3V MEETING. THE JOINT COLLABORATIVE TEAM ON 3D VIDEO CODING EXTENSION DEVELOPMENT OF ISO/IEC JTC1/SC29/WG11 AND ITU-T SG.16, 25 October 2013, vol. 6